# EUROPÄISCHE PATENTSCHRIFT

(11) **EP 1 754 615 B1**
(45) Veröffentlichungstag und Bekanntmachung des Hinweises auf die Patenterteilung: **26.11.2008**
(21) Anmeldenummer: 06115769.9
(22) Anmeldetag: 21.06.2006
(51) Int. Cl.: B60C 9/18, B60C 9/22

(54) **Fahrzeugluftreifen**
Vehicle tire
Bandage pneumatique pour véhicule

(30) Priorität: 19.08.2005 DE 102005039274
(43) Veröffentlichungstag der Anmeldung: 21.02.2007
(73) Patentinhaber: Continental Aktiengesellschaft, 30165 Hannover (DE)
(72) Erfinder: Korte, Hans-Bernd, 31515, Wunstorf (DE); Billing, Hans-Martin, 30161, Hannover (DE); Carl, Wilfried, 12159, Berlin (DE); Minx, Carsten, 31535, Neustadt (DE); Mazur, Heinz, 30900, Wedemark (DE)

(56) Entgegenhaltungen:
- EP-A1- 0 732 227
- FR-A- 2 842 142
- US-A- 2 945 525

## Beschreibung

Die Erfindung betrifft einen Fahrzeugluftreifen, insbesondere einen Nutzfahrzeugreifen, mit einer Radialkarkasse, einem Laufstreifen und einem mehrlagigen Gürtelverband, welcher mindestens zwei Gürtellagen aufweist, deren Festigkeitsträger in jeder Lage parallel zueinander und bezüglich der Umfangsrichtung des Reifens unter einem Winkel verlaufen, und welcher zumindest eine weitere zwischen zwei Gürtellagen angeordnete 0°-Gürtellage aufweist, deren Festigkeitsträger in Umfangsrichtung verlaufende Stahlkordfäden oder textile Fäden, beispielsweise aus Aramid, sind.

Es ist bekannt, im Gürtelverband von Nutzfahrzeugreifen eine sogenannte 0°-Gürtellage mit in Umfangsrichtung verlaufenden Stahlkordfäden als Festigkeitsträger vorzusehen, welche das Umfangswachstum des Reifens im Betrieb möglichst gering halten soll. Ein sehr aufwändiges Verfahren zur Herstellung sieht vor, den Reifen auf einer konturierten Bautrommel aufzubauen. Das Auflegen herkömmlicher Gürtellagen auf solchen Bautrommeln ist problematisch, Schwierigkeiten ergeben sich insbesondere beim Spleißen.

Aus der EP 0 287 496 B ist ein PKW-Reifen mit einer Radialkarkasse, einem Laufstreifen und einem mehrlagigen Gürtelverband bekannt, dessen radial äußerste Gürtellage eine Overlay-Lage mit textilen Festigkeitsträgern ist, welche in Umfangsrichtung verlaufen. Die Festigkeitsträger sind in parallelen Reihen von Abschnitten angeordnet, welche in jeder Reihe im Wesentlichen die gleichen Längen aufweisen und durch Unterbrechungen bzw. Abstände voneinander getrennt sind. Diese Festigkeitsträgerabschnitte weisen dabei eine Länge zwischen 1/4 und 1/8 des Umfanges des Reifens auf. Durch diese spezielle Ausführung der Overlay-Lage des Gürtels eines PKW-Reifens sollen die Hochgeschwindigkeitshaltbarkeit und der Komfort beim Abrollen verbessert werden.

Bei der konventionellen Reifenfertigung werden die Gürtellagen auf einer zylindrischen Gürteltrommel nacheinander aufgelegt und gespleißt. Die Gürtellagen sind geschnittene Bahnen aus parallel zueinander verlaufenden, in eine Gummimatrix, die Gummierungsmischung, eingebetteten Stahlkordfäden, die zur Umfangsrichtung unter einem Winkel von 13° bis 28° verlaufen. Der fertiggestellte Rohreifen wird in einer Vulkanisationsform geheizt, wobei in das Reifeninnere ein Balg eingebracht wird, welcher aufgebläht wird, um den Reifen von innen her in die Vulkanisationsform, insbesondere in die das Profil einprägenden Heizformsegmente, einzupressen. Dabei findet die sogenannte "Resterhebung" statt, der Rohreifen wird von innen her etwas gedehnt, wobei die Festigkeitsträger in den Gürtellagen eine Dehnung von 1,5% bis 2% erfahren. In Umfangsrichtung verlaufende zugfestere Fäden in einer Gürtellage würden die erforderliche Resterhebung erschweren.

Der Erfindung liegt somit die Aufgabe zu Grunde, die Herstellung eines Reifens mit einer °0-Gürtellage aus Stahlkordfäden oder aus textilen zugfesten Fäden auf konventionellen Bautrommeln mit zylindrischen Außenflächen zu ermöglichen.

Gelöst wird die gestellte Aufgabe erfindungsgemäß dadurch, dass die Fäden in der 0°-Gürtellage frühestens nach einmaligem Umlaufen des Reifenumfanges durchtrennt und derart in ihrem Verlauf unterbrochen sind.

Die Fäden in der 0°-Gürtellage sind daher in ihrem Verlauf über den Umfang unterbrochen, sodass an den Schnittstellen beim Vulkanisieren des Reifens in der Reifenheizform während des Einformens kleine Lücken entstehen können, wodurch die erforderliche Resterhebung ermöglicht ist. Der Vorteil der 0°-Lage, ein Umfangswachstum zu verhindern, bleibt im fertigen Reifen voll erhalten.

Bei einer bevorzugten Ausführungsform der Erfindung sind die Fäden erst nach mehrmaligem Umlaufen des Reifenumfanges, insbesondere nach bis zu dreimaligem Umlaufen, unterbrochen. Es ist Sache des Reifenkonstrukteurs, ein Optimum herauszufinden, bei dem eine Resterhebung im erforderlichen Ausmaß möglich ist, aber ein weitgehend ununterbrochener Verlauf der Fäden in der Gürtellage gegeben ist.

Es gibt einige Möglichkeiten, die 0°-Gürtellage im Reifen auf besonders einfache Weise aufzubauen. Bei einer dieser Möglichkeiten sind die Fäden einzelne gummierte Stahlkordfäden, bei einer anderen Variante ist eine Anzahl parallel zueinander verlaufender Fäden, die Stahlkordfäden oder textile Fäden sein können, in einem Materialstreifen aus Gummi eingebettet. Wird der Stahlkordfaden bzw. der Materialstreifen nach einmaligem Umlaufen des Reifenumfanges durchtrennt, kann er ringförmig über den Reifenumfang verlaufen. In diesem Fall setzt sich die Gürtellage aus einer Anzahl von ringartig über den Reifenumfang verlaufenden Stahlkordfäden bzw. Materialstreifen zusammen.

Erfolgt ein Durchtrennen der Stahlkordfäden bzw. Materialstreifen erst nachdem ein einmaliger Umlauf über den Reifenumfang durchgeführt ist, so ist es von Vorteil, ein kontinuierliches Fortsetzen der Stahlkordfäden bzw. Materialstreifen durch einen spiraligen Verlauf sicher zu stellen.

Ein Umfangswachstum des Reifens im Betrieb wird dann besonders wirkungsvoll vermieden oder zumindest gering gehalten, wenn zumindest die zweite Gürtellage eine derartige 0°-Lage ist. In diesem Zusammenhang ist es auch von Vorteil wenn der Gürtel zwei übereinander angeordnete 0°-Lagen gleicher Breite enthält.

Die 0°-Lage wird Vorteilhafterweise dann aus Einzelfäden hergestellt, wenn ihre Breite geringer ist als die Breite der beiden benachbarten Gürtellagen.

Mit einem Materialstreifen kann auch eine 0°-Gürtellage erstellt werden, die breiter ist als die beiden benachbarten Lagen.

Die Erfindung betrifft auch ein Verfahren zur Herstellung eines Fahrzeugluftreifens, insbesondere eines Nutzfahrzeugreifens, welcher gemäß der Erfindung ausgeführt ist.

Dabei wird die 0°-Gürtellage aus gummierten Stahlkordfäden oder aus Materialstreifen aus in eine Gummimatrix eingebetteten Stahlkordfäden oder textilen Fäden erstellt, welche mindestens einmal um eine bereits aufgebaute Gürtellage gewickelt und anschließend durchtrennt werden, wobei das Wickeln fortgesetzt wird, indem ein Stahlkordfaden oder ein Materialstreifen an dem abgeschnittenen Ende unmittelbar angesetzt wird, wobei dieser Vorgang solange wiederholt wird, bis die Gürtellage fertig aufgebaut ist.

Die durchtrennten bzw. durchbrochenen Stellen sollten möglichst gleichmäßig über den Gürtelumfang verteilt sein und es werden daher die durchtrennten Stellen derart angeordnet, dass sie gegeneinander sowohl in Reifenumfangsrichtung als auch in Reifenquerrichtung versetzt sind.

Weitere Merkmale, Vorteile und Einzelheiten der Erfindung werden nun anhand der Zeichnung, die Ausführungsbeispiel darstellt, näher beschrieben. Dabei zeigen
Fig. 1 einen Querschnitt durch die Hälfte eines Fahrzeugluftreifens und
Fig. 2 bis Fig. 4 Teilabwicklungen einer Gürtellage mit unterschiedlichen Ausführungsformen der Erfindung.

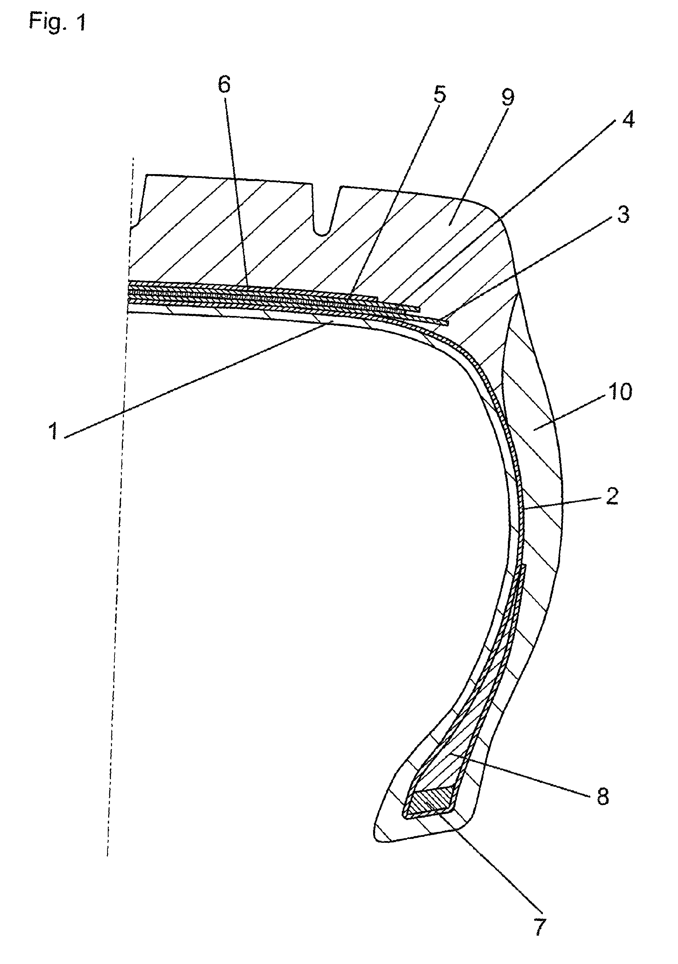

Fig. 1 zeigt einen Querschnitt durch einen Nutzfahrzeugreifen mit einer luftdichten Innenschicht 1, einer Karkasse 2, welche insbesondere Stahlkorde als Festigkeitsträger aufweist, mit einem aus vier Lagen 3, 4, 5 und 6 bestehenden Gürtelverband, Seitenwänden 10, Wulstbereichen mit Wulstkernen 7 und Kernprofilen 8 und einem Laufstreifen 9. Die Karkasse 2 ist eine Radialkarkasse, deren Stahlkorde im Wesentlichen parallel zueinander in radialer Richtung von Wulstbereich zu Wulstbereich verlaufen.

Bei der dargestellten Ausführungsform ist die vierte, radial äußerste Gürtellage 6 am schmälsten von allen Lagen und bildet die sogenannte Schutzlage. Die erste Gürtellage 3 ist die Sperrlage, die zweite und die dritte Gürtellagen 4, 5 sind die sogenannten Arbeitslagen. Die Gürtellagen 3, 5 und 6 bestehen aus in eine Gummimischung, die Gürtelgummierung, eingebetteten Stahlkordfäden, welche in jeder der Lagen 3, 5 und 6 parallel zueinander verlaufen. Der Winkel, welchen die Stahlkordfäden in den Gürtellagen 3, 5 und 6 mit der Umfangsrichtung einschließen, wird insbesondere zwischen 16° und 25° gewählt. Die gegenseitige Anordnung der Stahlkordfäden in den Gürtellagen 3, 5 und 6 ist dabei derart betroffen, dass die Stahlkordfäden der aufeinander folgenden Gürtellagen einander kreuzen.

Bei der dargestellten Ausführungsform ist die radial innerste Gürtellage 3 die breiteste Gürtellage, die zweite Gürtellage 4 ist etwas breiter als die radial äußerste Gürtellage 6, aber schmäler als die dritte Gürtellage 5. Zwischen der ersten und dritten Gürtellage 3, 5 kann seitlich der Gürtellage 4 jeweils ein Gürtelpolster oder ein Gürtelrandstreifen, die nicht dargestellt sind, eingebracht sein.

Die zweite Gürtellage 4 ist eine 0°-Lage, bei der die ebenfalls zueinander parallel verlaufenden Festigkeitsträger in Umfangsrichtung bzw. unter einem Winkel, der um maximal 5° von der Umfangsrichtung abweicht, verlaufen.

Der in sämtlichen Gürtellagen 3, 4, 5 und 6 verwendete Stahlkord kann einer der in Gürtellagen von Nutzfahrzeugstreifen üblicher Weise eingesetzten Stahlkorde sein, beispielsweise ein Stahlkord der Konstruktion 6+2, 3+9, 3+9+15 oder dergleichen.

Die zweite Gürtellage 4, die 0°-Lage, wird gemäß der Erfindung entweder aus zumindest einem einzelnen gummierten Stahlkordfaden bzw. mehreren einzelnen gummierten Stahlkordfäden oder einem Mischungsstreifen, welcher mehrere Stahlkordfäden oder textile Fäden mit einem hohen E-Modul enthält, beispielsweise Aramidfäden, hergestellt.

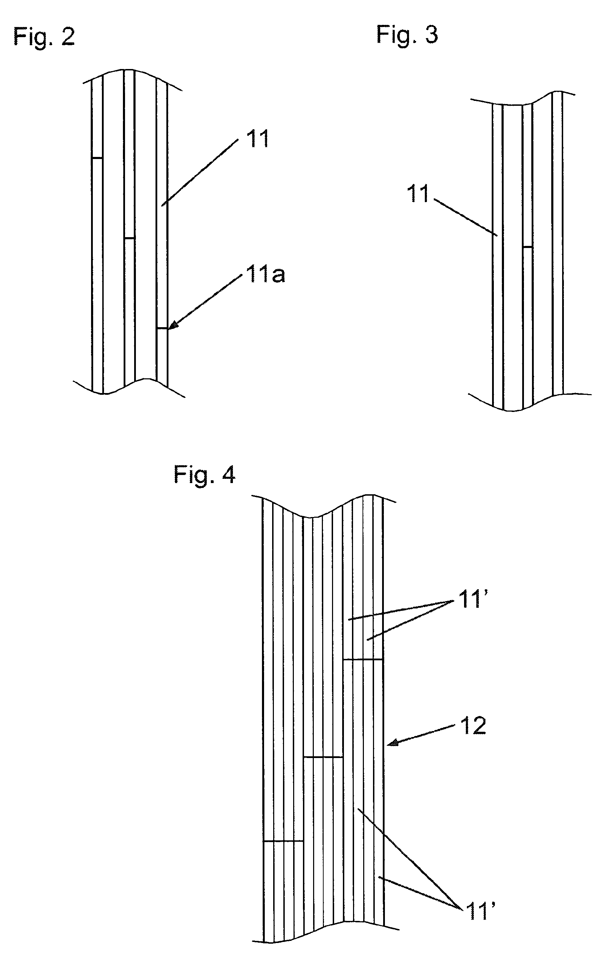

Der gummierte Stahlkordfaden 11 wird bei der Herstellung des Reifens nach dem Aufbringen und Spleißen der ersten Gürtellage 3 durch Aufwickeln, unterbrochen durch gezieltes Abschneiden des Fadens, aufgebracht und daher mehrmals durch Schneiden in Segmente bzw. Abschnitte geteilt. Fig. 2 zeigt eine Ausführungsform, bei welcher der gummierte Stahlkordfaden 11 einmal um den Reifenumfang gewickelt und beim Erreichen seines anfänglichen Endes geschnitten wird, und zwar derart, dass möglichst kein oder nur ein sehr kleiner Spalt zwischen den beiden Stahlkordfädenenden verbleibt. Anschließend wird der Stahlkordfaden 11 seitlich um den vorgesehenen Abstand von etwa 1,5 mm und ein Stück in Umfangsrichtung versetzt, wieder komplett um die erste Gürtellage 3 gewickelt und Ende an Ende liegend geschnitten. Dieser Vorgang wird solange fortgesetzt, bis die gesamte Gürtellage 4 fertig gewickelt ist. Der Versatz in Umfangsrichtung wird dabei so gewählt, dass die einander zugewandten Enden der einzelnen Stahlkordfadenwicklungen über den Reifenumfang und über die Reifenbreite möglichst gleichmäßig verteilt sind.

Fig. 2 zeigt die Anordnung der Stahlkordfädenenden unmittelbar nach dem Wickeln. Anschließend werden die beiden Gürtellagen 5 und 6 auf herkömmliche Weise aufgebracht, der Rohreifen mit dem Laufstreifen 9 und den weiteren gegebenenfalls noch vorgesehenen Bauteilen komplettiert und zum Vulkanisieren in eine Reifenheizform eingebracht. Zum Vulkanisieren wird in das Innere des Rohreifens ein Balg eingeführt, dieser wird aufgebläht, wodurch der Rohreifen von innen her in die Reifenheizform eingepresst wird. Dabei findet die sogenannte "Resterhebung" statt, bei der der Gürtelverband eine Dehnung von 1,5% bis 2% erfährt. Die Dehnung der 0°-Lage 4 wird dadurch ermöglicht, dass an den Schnittstellen Lücken zwischen den einander zugewandten Enden der einzelnen Stahlkorden entstehen können.

Fig. 3 zeigt eine weitere Ausführungsform der Herstellung der 0°-Lage 4. Der Stahlkordfaden 11 wird ein Stück weiter gewickelt als es dem gesamten Umfang entsprechen würde, bevor er abgeschnitten wird. Auch bei dieser Ausführungsform wird unmittelbar nach dem Schnitt die Wicklung des Stahlkordfadens 11 fortgesetzt. Dadurch ergibt sich insgesamt gesehen ein spiraliges Wickelbild des Stahlkords in der Gürtellage 4. Auch bei dieser Ausführungsform werden die Schnittstellen möglichst gleichmäßig über den Reifenumfang und über die Reifenbreite verteilt. Bei einer weiteren, nicht dargestellten Ausführungsform kann der Stahlkordfaden zwei- oder dreimal über den Umfang gewickelt werden, bevor sein Verlauf durch Schneiden unterbrochen wird.

Fig. 4 zeigt eine weitere Ausführungsform der Erfindung, bei der die Gürtellage 4 aus einem Materialstreifen 12 hergestellt, welcher aus drei bis vier in Längsrichtung des Streifens verlaufenden Stahlkordfäden 11', die in eine Gummimatrix eingebettet sind, besteht. Der Streifen 12 weist beispielsweise eine Breite von wenigen Millimetern auf und wird analog zu Fig. 2 einmal über den Umfang gewickelt und Stoß an Stoß mit dem Streifenanfang liegend geschnitten. Insbesondere in seitliche Kontakt mit dieser Wicklung wird die nächste Wicklung erstellt, wobei der Streifen 12 auch in Umfangsrichtung versetzt wird. Der Streifen 12 kann ferner analog zu Fig. 3 gewickelt werden, sodass sich insgesamt ein spiralförmiges Wickelbild für die Gürtellage 4 ergibt. Auch bei diesen Ausführungsformen wird vorzugsweise darauf geachtet, dass die Schnittstellen möglichst gleichmäßig über den Umfang und über die Reifenbreite verteilt sind. Der Streifen kann ferner mehr als einmal um den Umfang gewickelt werden bis eine Unterbrechung durch Schneiden erfolgt. Anstelle von Fäden aus Stahlkord kann der Materialstreifen auch textile Fäden, etwa aus Aramid, enthalten.

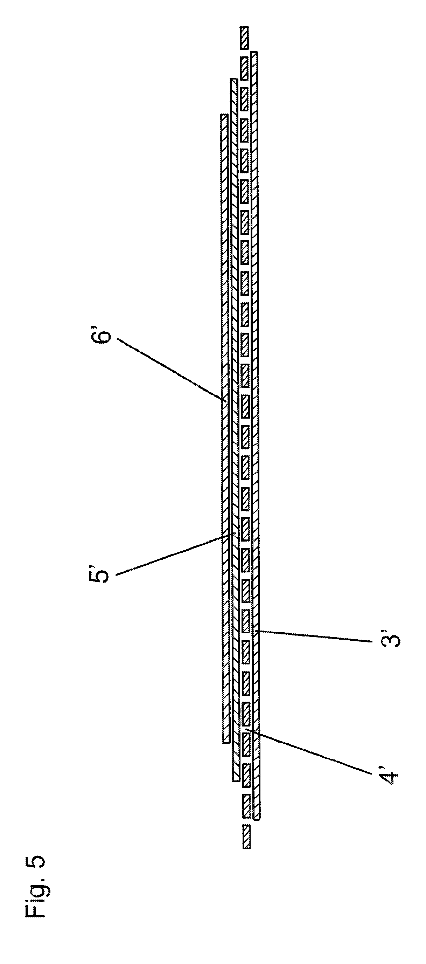

Fig. 5 zeigt eine Variante der grundsätzliche Anordnung von Gürtellagen 3', 4', 5', 6', wobei die Gürtellage 4' eine gemäß der Erfindung ausgeführte 0°-Lage aus einem Materialstreifen ist und die breiteste sämtlicher Gürtellagen ist. Der Winkel, den die Festigkeitsträger in den weiteren Gürtellagen 3', 5', 6' mit der Umfangsrichtung einschließen, wird zwischen 16° und 25° gewählt.

Es können ferner anstelle einer 0°-Lage zwei 0°-Lagen übereinander vorgesehen werden, die bevorzugt gleich breit ausgeführt sind.

## Patentansprüche

1. Fahrzeugluftreifen, insbesondere Nutzfahrzeugreifen, mit einer Radialkarkasse (2), einem Laufstreifen (9) und einem mehrlagigen Gürtelverband, welcher mindestens zwei Gürtellagen (3, 5, 6; 3', 5', 6') aufweist, deren Festigkeitsträger in jeder Lage parallel zueinander und bezüglich der Umfangsrichtung des Reifens unter einem Winkel verlaufen, und welcher zumindest eine weitere, zwischen zwei Gürtellagen (3, 5; 3', 5') angeordnete Gürtellage (4, 4') aufweist, deren Festigkeitsträger in Umfangsrichtung verlaufende Stahlkordfäden oder textile Fäden, beispielsweise aus Aramid, sind,
**dadurch gekennzeichnet,**
**dass** die Fäden (11, 11') in der 0°-Gürtellage (4, 4') frühestens nach einmaligem Umlaufen des Reifenumfanges durchtrennt und derart in ihrem Verlauf unterbrochen sind.

2. Fahrzeugluftreifen nach Anspruch 1, **dadurch gekennzeichnet, dass** die Fäden (11) nach mehrmaligem Umlaufen des Reifenumfanges, insbesondere nach bis zu dreimaligem Umlaufen, unterbrochen sind.

3. Fahrzeugluftreifen nach Anspruch 1 oder 2, **dadurch gekennzeichnet, dass** die Stahlkordfäden (11) einzelne gummierte Stahlkordfäden (11) sind.

4. Fahrzeugluftreifen nach Anspruch 1 oder 2, **dadurch gekennzeichnet, dass** eine Anzahl parallel zueinander verlaufender Fäden (11'), welche Stahlkordfäden oder textile Fäden sind, in einem Materialstreifen (12) aus Gummi eingebettet ist.

5. Fahrzeugluftreifen nach einem der Ansprüche 1 bis 4, **dadurch gekennzeichnet, dass** die Stahlkordfäden (11) bzw. die Materialstreifen (12) ringartig über den Reifenumfang verlaufen.

6. Fahrzeugluftreifen nach einem der Ansprüche 1 bis 4, **dadurch gekennzeichnet, dass** die Stahlkordfäden (11) bzw. die Materialstreifen spiralig über den Reifenumfang verlaufen.

7. Fahrzeugluftreifen nach einem der Ansprüche 1 bis 6, **dadurch gekennzeichnet, dass** die 0°-Lage (4, 4') die zweite Gürtellage ist.

8. Fahrzeugluftreifen nach einem der Ansprüche 1 bis 7, **dadurch gekennzeichnet, dass** der Gürtel zwei übereinander angeordnete 0°-Lagen gleicher Breite enthält.

9. Fahrzeugluftreifen nach einem der Ansprüche 1 bis 8, **dadurch gekennzeichnet, dass** die 0°-Lage(n) schmäler ist bzw. sind, als die benachbarten sonstigen Gürtellagen (3, 5) und aus Einzelfäden (11) erstellt ist bzw. sind.

10. Fahrzeugluftreifen nach einem der Ansprüche 1 bis 8, **dadurch gekennzeichnet, dass** die 0°-Lage(n) (4') breiter ist bzw. sind als die benachbarten sonstigen Gürtellagen (3', 5') und aus Materialstreifen erstellt ist bzw. sind.

11. Verfahren zur Herstellung eines Fahrzeugluftreifens, insbesondere eines Nutzfahrzeugreifens, nach zumindest einem der Ansprüche 1 bis 10, **dadurch gekennzeichnet, dass** die 0°-Gürtellage (4, 4') aus gummierten Stahlkordfäden (11) oder aus Materialstreifen (12) aus in eine Gummimatrix eingebetteten Stahlkordfäden(11') oder textilen Fäden erstellt wird, welche mindestens einmal um eine bereits aufgebrachte Gürtellage (3, 3') gewickelt und anschließend durchtrennt werden, wobei das Wickeln fortgesetzt wird, indem ein Stahlkordfaden (11) oder ein Materialstreifen (12) an dem abgeschnittenen Ende unmittelbar angesetzt wird, wobei dieser Vorgang solange wiederholt wird, bis die Gürtellage (4, 4') fertig aufgebaut ist.

12. Verfahren zur Herstellung eines Fahrzeugluftreifens nach Anspruch 11, **dadurch gekennzeichnet, dass** die durchtrennten Stellen gegeneinander in Umfangsrichtung des Reifens und in Querrichtung des Reifens versetzt werden.

## Claims

1. Pneumatic vehicle tyre, in particular a commercial vehicle tyre, with a radial carcass (2), a tread rubber (9) and a multiply breaker belt assembly, which has at least two belt plies (3, 5, 6; 3', 5', 6'), the reinforcing elements of which in each ply run parallel to one another and at an angle with respect to the circumferential direction of the tyre, and which has arranged between two belt plies (3, 5; 3, 5') at least one further belt ply (4, 4'), the reinforcing elements of which are circumferentially running steel cord filaments or textile filaments, for example of aramid, **characterized in that** the filaments (11, 11') in the 0° belt ply (4, 4') are severed, and in this way interrupted in their path, at the earliest after running around the belt circumference once.

2. Pneumatic vehicle tyre according to Claim 1, **characterized in that** the filaments (11) are interrupted after running around the tyre circumference a number of times, in particular after running around it up to three times.

3. Pneumatic vehicle tyre according to Claim 1 or 2, **characterized in that** the steel cord filaments (11) are individual rubberized steel cord filaments (11).

4. Pneumatic vehicle tyre according to Claim 1 or 2, **characterized in that** a number of filaments (11') running parallel to one another, which are steel cord filaments or textile filaments, are embedded in a material strip (12) of rubber.

5. Pneumatic vehicle tyre according to one of Claims 1 to 4, **characterized in that** the steel cord filaments (11) or the material strips (12) run over the tyre circumference in a ring-like manner.

6. Pneumatic vehicle tyre according to one of Claims 1 to 4, **characterized in that** the steel cord filaments (11) or the material strips run over the tyre circumference in a spiral manner.

7. Pneumatic vehicle tyre according to one of Claims 1 to 6, **characterized in that** the 0° ply (4, 4') is the second belt ply.

8. Pneumatic vehicle tyre according to one of Claims 1 to 7, **characterized in that** the belt includes two 0° plies of the same width, arranged one on top of the other.

9. Pneumatic vehicle tyre according to one of Claims 1 to 8, **characterized in that** the 0° ply (plies) is or are narrower than the other adjacent belt plies (3, 5) and is or are produced from individual filaments (11).

10. Pneumatic vehicle tyre according to one of Claims 1 to 8, **characterized in that** the 0° ply (plies) (4') is or are wider than the other adjacent belt plies (3', 5') and is or are produced from material strips.

11. Method for producing a pneumatic vehicle tyre, in particular a commercial vehicle tyre, according to at least one of Claims 1 to 10, **characterized in that** the 0° belt ply (4, 4') is produced from rubberized steel cord filaments (11) or from material strips (12) of steel cord filaments (11') or textile filaments embedded in a rubber matrix, which are wound at least once around an already applied belt ply (3, 3') and subsequently severed, the winding being continued by a steel cord filament (11) or a material strip (12) being set directly against the cut-off end, this operation being continued until the belt ply (4, 4') has been built up completely.

12. Method for producing a pneumatic vehicle tyre according to Claim 11, **characterized in that** the severed places are offset with respect to one another in the circumferential direction of the tyre and in the transverse direction of the tyre.

## Revendications

1. Bandage pneumatique pour véhicule, en particulier bandage pour véhicule utilitaire, doté d'une carcasse radiale (2), d'une bande de roulement (9) et d'un ensemble de ceinture en plusieurs couches qui présente au moins deux couches de ceinture (3, 5, 6 ; 3', 5', 6') dont les renforts s'étendent dans chaque couche parallèlement les uns aux autres et obliquement par rapport au sens de la périphérie du bandage et qui présente au moins une autre couche de ceinture (4, 4') disposée entre deux couches de ceinture (3, 5 ; 3', 5') dont les renforts sont des fils d'acier ou des fils textiles, par exemple en aramide, qui s'étendent dans la direction périphérique,
**caractérisé en ce que**
dans la couche de ceinture (4, 4') à 0°, les fils (11, 11') sont coupés au plus tôt après un tour de la périphérie du bandage, ce qui interrompt leur extension.

2. Bandage pneumatique pour véhicule selon la revendication 1, **caractérisé en ce que** les fils (11) sont interrompus après plusieurs tours de la périphérie du bandage et en particulier après au plus trois tours.

3. Bandage pneumatique pour véhicule selon la revendication 1 ou 2, **caractérisé en ce que** les fils d'acier (11) sont des fils d'acier (11) caoutchoutés un par un.

4. Bandage pneumatique pour véhicule selon la revendication 1 ou 2, **caractérisé en ce que** plusieurs fils (11') qui s'étendent parallèlement les uns aux autres et qui sont des fils d'acier ou des fils textiles sont incorporés dans une bande de matière (12) en caoutchouc.

5. Bandage pneumatique pour véhicule selon l'une des revendications 1 à 4, **caractérisé en ce que** les fils d'acier (11) ou la bande de matière (12) s'étendent en anneau à la périphérie du bandage.

6. Bandage pneumatique pour véhicule selon l'une des revendications 1 à 4, **caractérisé en ce que** les fils d'acier (11) ou les bandes de matière s'étendent en spirale à la périphérie du bandage.

7. Bandage pneumatique pour véhicule selon l'une des revendications 1 à 6, **caractérisé en ce que** la couche (4, 4') à 0° est la deuxième couche de ceinture.

8. Bandage pneumatique pour véhicule selon l'une des revendications 1 à 7, **caractérisé en ce que** la ceinture contient deux couches à 0° de même largeur et disposées l'une au-dessus de l'autre.

9. Bandage pneumatique pour véhicule selon l'une des revendications 1 à 8, **caractérisé en ce que** la ou les couches à 0° sont plus étroites que les autres couches de ceinture (3, 5) voisines et sont constituées de fils (11) distincts.

10. Bandage pneumatique pour véhicule selon l'une des revendications 1 à 8, **caractérisé en ce que** la ou les couches (4') à 0° sont plus larges que les autres couches de ceinture (3', 5') et sont constituées de bandes de matière.

11. Procédé de fabrication d'un bandage pneumatique pour véhicule, en particulier d'un bandage pour véhicule utilitaire selon au moins l'une des revendications 1 à 10, **caractérisé en ce que** la couche de ceinture (4, 4') à 0° est constituée de fils d'acier (11) caoutchoutés ou de bandes de matière (12) constituées de fils d'acier (11') incorporés dans une matrice de caoutchouc ou de fils textiles qui sont enroulés au moins une fois autour d'une couche de ceinture (3, 3') déjà appliquée et sont ensuite découpés, l'enroulement étant poursuivi en plaçant un fil d'acier (11) ou une bande de matière (12) directement sur l'extrémité découpée, cette opération étant répétée jusqu'à ce que la couche de ceinture (4, 4') finale soit formée.

12. Procédé de fabrication d'un bandage pneumatique pour véhicule selon la revendication 11, **caractérisé en ce que** les emplacements séparés sont décalés les uns par rapport aux autres dans la direction de la périphérie du bandage et dans la direction transversale du bandage.
